# EUROPÄISCHE PATENTSCHRIFT

(11) **EP 0 609 534 B1**
(45) Veröffentlichungstag und Bekanntmachung des Hinweises auf die Patenterteilung: **20.03.1996**
(21) Anmeldenummer: 93120284.0
(22) Anmeldetag: 16.12.1993
(51) Int. Cl.: B60K 11/08, F16B 21/06

(54) **Vorrichtung zum Befestigen von Teilen, insbesondere von Kraftfahrzeugteilen**
Device for fastening parts, especially parts of motor vehicles
Dispositif pour fixer des pièces, en particulier des pièces de véhicules à moteur

(30) Priorität: 05.02.1993 DE 4303370
(43) Veröffentlichungstag der Anmeldung: 10.08.1994
(73) Patentinhaber: YMOS AKTIENGESELLSCHAFT Industrieprodukte, D-63179 Obertshausen (DE)
(72) Erfinder: Dipl.-Ing. Raim, Peter, D-63303 Dreieich (DE); Dipl.-Ing. Diehl, Peter, D-63110 Rodgau (DE)
(74) Vertreter: Schieferdecker, Lutz, Dipl.-Ing.

(56) Entgegenhaltungen:
- EP-A- 0 332 846
- DE-A- 4 106 158
- GB-A- 2 031 506
- US-A- 4 356 601
- US-A- 4 379 648
- US-A- 4 521 050
- PATENT ABSTRACTS OF JAPAN vol. 10, no. 14 (M-447) (2071) 21. Januar 1986 & JP-A-60 174 318 (NISSAN) 7. September 1985

## Beschreibung

Die Erfindung bezieht sich auf eine Befestigungsvorrichtung zum Befestigen eines Einbauteils in einer Montageöffnung eines Grundteils, insbesondere zum Einbauen eines Kraftfahrzeugteils wie ein Kühlergitter in die Karosseriewand oder Motorhaube eines Kraftfahrzeugs, mit einem mit dem Einbauteil verbundenen Befestigungsteil und einem separaten Halteteil, das ein erstes Halteelement zur Anlage am Öffnungsrand des Grundteils aufweist, wobei am Befestigungsteil und am Halteteil zusammenwirkende Führungsteile zur längsverschiebbaren Lagerung des Halteteils am Befestigungsteil sowie zusammenwirkende Eingreifteile, von denen eines federnd auslenkbar ist, zur Fixierung der gegenseitigen Lage zwischen dem Befestigungsteil und dem Halteteil in der Einbaustellung vorgesehen sind, ein zweites Halteelement mit einer Haltefläche vorgesehen ist, die in der Einbaustellung an der dem ersten Halteelement abgewandten Seite des Öffnungsrandes anliegt, und von den beiden in der Einbaustellung gegensinnig am Öffnungsrand anliegenden Halteelementen eines beim einbaugemäßen Passieren der Öffnungsrandkante durch diese federnd auslenkbar ist.

Eine derartige Befestigungsvorrichtung ist aus der US-A-4 379 648 bekannt. Sie dient zur Befestigung eines Kühlergrills. Dabei ist das Befestigungsteil entweder einstückig am Einbauteil angeformt oder es wurde nachträglich mit diesem verbunden. Es dient der Anbringung des separaten Halteteils, das bei der bekannten Ausbildung beide Halteelemente trägt, die somit eine vorgegebene gegenseitige Anordnung haben.

Insgesamt sind zwei obere und zwei untere Befestigungsvorrichtungen vorgesehen, die jeweils mit zugeordneten Befestigungsöffnungen nahe dem Rand der Montageöffnung für den Kühlergrill zusammenwirken. Der Einbau wird so vorgenommen, daß das Halteteil von vorne bzw. außen in die Befestigungsöffnung eingedrückt wird, wobei das erste oder vordere Halteelement mit zwei beim Auftreffen auf den Öffnungsrand einwärts federnden Halteflügeln durch die Befestigungsöffnung durchgedrückt wird, worauf sich ein flanschförmiges zweites Halteelement am Halteteil vorderseitig an den Öffnungsrand anlegt, während die Halteflügel des ersten Halteelements nach dem vollständigen Passieren des Öffnungsrandes nach außen zurückfedern und den Öffnungsrand innenseitig hintergreifen. Dabei kann das Halteteil wahlweise vor oder nach diesem Eindrücken mit dem Befestigungsteil verbunden werden, indem diese Teile längs ihrer in der Eindrückrichtung des Halteteils verlaufenden Führung zusammengeschoben werden, bis ein am Halteteil vorgesehenes federnd auslenkbares Eingreifteil eine Querleiste am Befestigungsteil hakenförmig hintergreift. Diese durch bloßes Eindrücken erfolgende Montage ist einfacher als die weitgehend übliche Befestigung mittels Schrauben.

Nachteilig ist bei der bekannten Befestigungsvorrichtung jedoch der bereits angesprochene feste Abstand zwischen den beiden am Halteteil vorgesehenen Halteelementen bzw. ihrer Anlageflächen, die am Öffnungsrand angreifen. Dieser Abstand muß so bemessen sein, daß das erste bzw. in Einschubrichtung vordere Halteelement den Öffnungsrand vollständig passiert, bevor das in Einschubrichtung hintere Halteelement sich außenseitig an den Öffnungsrand angelegt hat. Daher ist die Öffnungsrandstärke ein kritischer Wert, und es besteht die Gefahr, daß im Einbauzustand nach dem Auffedern des ersten Halteelements bzw. seiner Flügel die Halteelemente nicht mit der notwendigen Vorspannung am Öffnungsrand anliegen, die für eine sichere und zugleich rüttelfreie Befestigung erforderlich ist. Außerdem kann die bekannte Befestigungsvorrichtung mit einem ersten Halteelement, das zwei entgegengesetzt ausfedernde Flügel aufweist, die zwei im Abstand verlaufende Öffnungsränder einer angepaßten Befestigungsöffnung hintergreifen, nicht ohne weiteres dazu verwendet werden, mit dem Rand der Montageöffnung zusammen zu wirken, deren Größe dem Einbauteil angepaßt ist.

Ferner ist es aus der EP-A-332 846 bekannt, einen Kühlergrill zum Teil mittels Steckverbindungen und zum Teil mittels Schnappverbindungen zu befestigen, wobei der Kühlergrill zunächst mittels der Steckverbindungen auf einen Montageöffnungsrand aufgeschoben und dann mittels der Schnappverbindungen im Bereich einer gegenüberliegenden Montageöffnungskante in die endgültige Einbaustellung eingedrückt und verriegelt wird. Allerdings werden auch hier die Rastelemente durch gesonderte Befestigungsöffnungen eingedrückt. Außerdem sind sie an einer mit dem Kühlergrill verbundenen einteiligen Befestigungsvorrichtung vorgesehen.

Der Erfindung liegt die Aufgabe zugrunde, die eingangs beschriebene Befestigungsvorrichtung so auszubilden, daß sie bei einfacher und schneller Montage eine sichere und spielfreie Befestigung gewährleistet.

Diese Aufgabe wird mit einer Befestigungsvorrichtung der eingangs beschriebenen Art gelöst, bei der das zweite Halteelement am Befestigungsteil angeordnet ist, so daß der Abstand zwischen den beiden Halteelementen durch eine Relativbewegung zwischen dem Befestigungsteil und dem Halteteil veränderbar ist.

Durch diese erfindungsgemäße Maßnahme kann der Abstand zwischen den beiden Halteelementen den jeweiligen Gegebenheiten bzw. der Stärke des Öffnungsrandes angepaßt werden. Das sichert in Verbindung mit der Federwirkung des einen Halteelements eine spielfreie Befestigung ggf. auch bei Abweichungen in den Abmessungen des Öffnungsrandes.

Zweckmäßige Ausgestaltungen und Weiterbildungen der Erfindung ergeben sich aus den Unteransprüchen.

Die Erfindung wird nachstehend anhand eines Ausführungsbeispieles, das in der Zeichnung dargestellt ist, näher beschrieben. Dabei zeigen:
- Fig. 1:: eine zum Teil abgeschnitte Ansicht eines in eine Montageöffnung eingesetzten Teiles bzw. konkret eine Ansicht eines Kühlergitters und einer abgeschnittenen Motorhaube eines Kraftfahrzeuges;
- Fig. 2:: einen Schnitt längs der Linie II-II in Fig. 1 in größerem Maßstab;

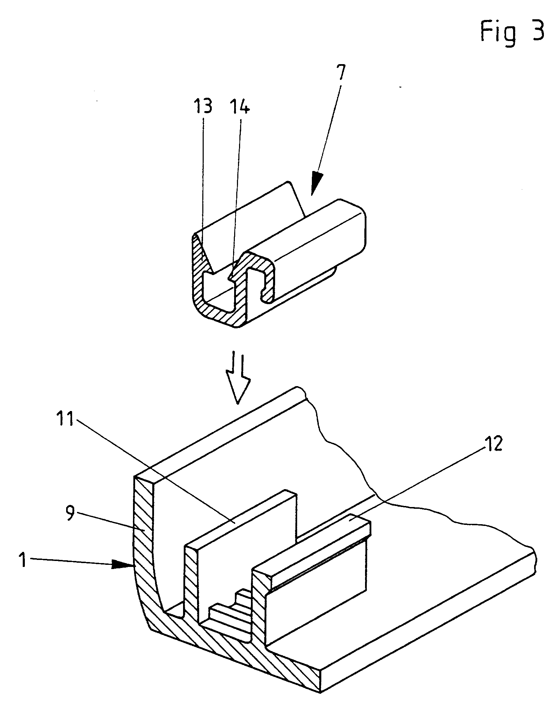

- Fig. 3:: in nochmals größerem Maßstab sowie im Schnitt und in perspektivischer Ansicht eine Einzelheit aus Fig. 2;
- Fig. 4:: im Schnitt sowie in perspektivischer Darstellung ein Stück des unteren Randes der Montageöffnung mit dem nur teilweise dargestellten Befestigungsteil;
- Fig. 5:: in perspektivischer Darstellung eine Ansicht des Halteteils;
- Fig. 6:: einen Schnitt längs der Linie VI-VI in Fig. 2;
- Fig. 7:: einen Schnitt längs der Linie VII-VII in Fig. 6 mit der Darstellung von drei Positionen a-c während der Montage;
- Fig. 8:: einen Schnitt längs der Linie VIII-VIII in Fig. 6 mit der Darstellung von drei Positionen a-c während der Montage; und
- Fig. 9:: abgeschnitten sowie in größerem Maßstab eine perspektivische Darstellung eines Hakenteiles und eines Abstandshalters am Halteteil.

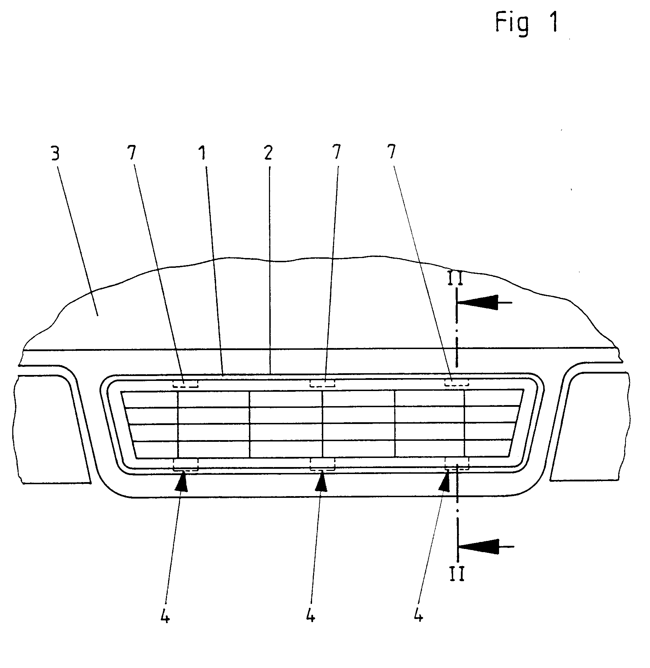

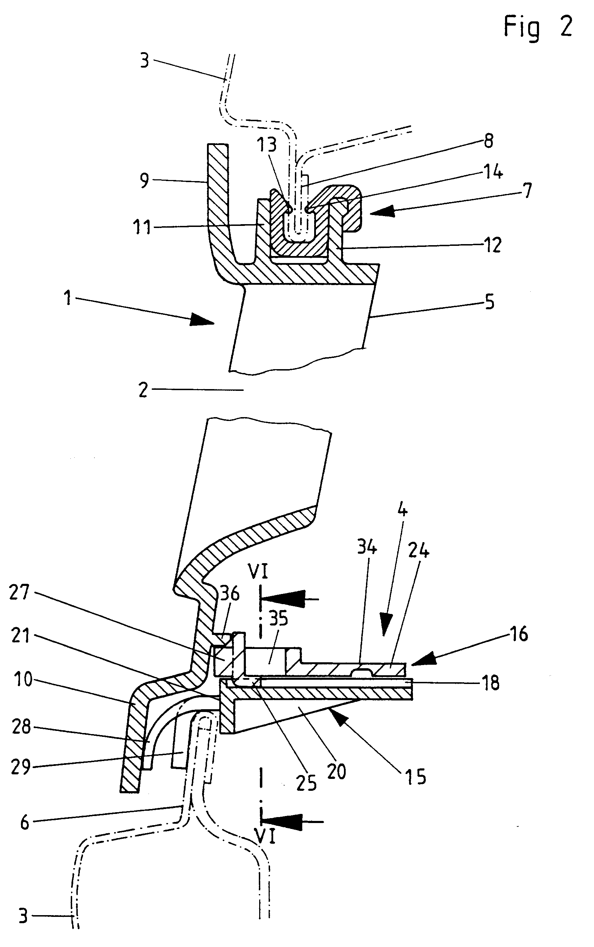

Eine Vorrichtung zum Befestigen eines Einbauteils 1 an einem Grundteil, beispielsweise eines Kraftfahrzeugteiles bzw. gemäß Ausführungsbeispiel eines Kühlergitters 1 in einer Montageöffnung 2 einer Motorhaube 3, umfasst clipsartige Befestigungsvorrichtungen 4, die an der Rückseite 5 des Einbauteils 1 angeordnet sind. Wie aus der Darstellung in Fig. 1 hervorgeht, befinden sich drei Befestigungsvorrichtungen 4 im unteren Bereich der Rückseite 5 des Kühlergitters 1 und wirken dort mit der Montageöffnung 2 der Motorhaube 3 zusammen. Ferner umfasst die Vorrichtung zum Befestigen des Kühlergitters 1 auch Steckelemente 7, die im oberen Bereich des Kühlergitters 1 angeordnet sind und dort mit dem oberen Rand 8 der Montageöffnung 2 zusammenwirken. Sowohl der untere Rand 6 als auch der obere Rand 8 der Montageöffnung 2 sind schmale, flanschartige sowie gebördelte Blechteile (Fig. 2).

Das gemäß Ausführungsbeispiel in der Montageöffnung 2 zu befestigende Kühlergitter 1 weist obere Randteile 9 und untere Randteile 10 auf. Zu den oberen Randteilen 9 gehören auch Halterippen 11, 12, die zur Fixierung der Steckelemente 7 dienen. Mit Hilfe dieser Steckelemente 7 wird das Kühlergitter 1 mit dem oberen Rand 8 bzw. Montageflansch 8 der Montageöffnung 2 verbunden, wozu das Kühlergitter 1 lediglich auf diesen Montageflansch 8 von unten nach oben aufgeschoben wird. Vorsprünge 13 und 14 und eine entsprechend enge Tolerierung sowie eine geeignete Werkstoffauswahl stellen sicher, daß das bzw. die Steckelemente das Kühlergitter 1 im oberen Randbereich sicher und rüttelfrei mit dem Montageflansch bzw. oberen Rand 8 der Montageöffnung 2 verbinden.

Die Befestigung des Kühlergitters 1 im Bereich seines unteren Randes erfolgt mit Hilfe der Befestigungsvorrichtungen 4 , die gemäß Ausführungsbeispiel jeweils aus einem Befestigungsteil 15 und einem Halteteil 16 bestehen. Beide Teile 15 und 16 wirken clipsartig, so daß die Befestigungsvorrichtung 4 ein Mehrfachschnappelement ist.

Der Befestigungsteil 15 ist unmittelbar und zweckmäßigerweise einstückig an der Rückseite 5 des Kühlergitters 1 angeordnet. Er dient zugleich als Träger für den Halteteil 16.

Der Halteteil 16 ist auf dem Befestigungsteil 15 bewegbar angeordnet. Dies ist bei der gewählten Konstruktion aus fertigungstechnischen Gründen und aus Montagegründen vorgesehen.

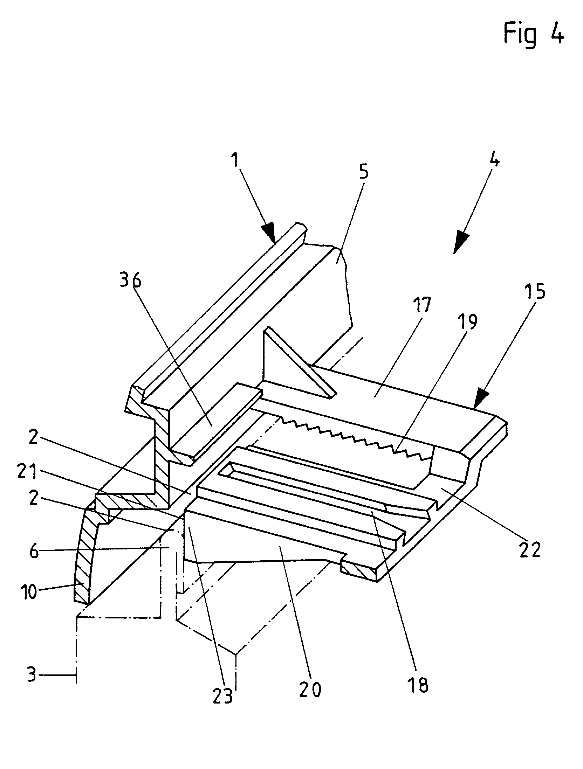

Der Befestigungsteil 15, der in Fig. 4 abgeschnitten sowie in perspektivischer Darstellung wiedergegeben ist, umfasst ein Führungsteil in Form von zwei von der Rückseite 5 des Einbauteils 1 wegragenden Armen 17, ein Führungsteil 18 sowie ein Eingreifteil 19 für den Halteteil 16. Er weist ferner ein ausschwenkbar angeordnetes zweites Halteelement 20 auf, das mit einer Haltefläche 21 der Rückseite 5 des Einbauteils 1 zugewandt ist. Eine Verzahnung dient als Eingreifteil 19 und ist jeweils an der Unterseite der Arme 17 angeordnet. Die Arme 17 sind ferner über einen Steg 22 miteinander verbunden. Das Halteelement 20 ist im Querschnitt keilförmig und zugleich mit dem Führungsteil 18 für den Halteteil 16 versehen. Das keilförmige Halteelement 20 ist ferner relativ zu den beiden Armen 17 bewegbar. Dazu ist das Halteelement 20 etwa um dem als Achse dienenden Steg 22 derart verschwenkbar, daß die Haltefläche 21 am freien Ende 23 des Halteelements 20 annähernd parallel zur Rückseite 5 des Kühlergitters 1 bewegbar ist.

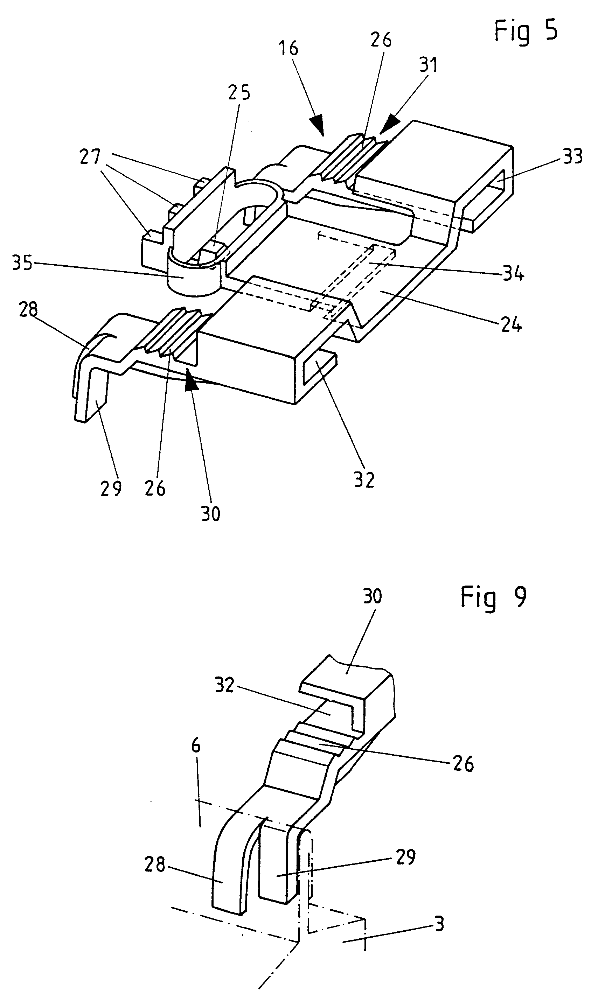

Der ebenfalls zur Befestigungsvorrichtung 4 gehörende Halteteil 16 ist ein getrennt herstellbares Teil (Fig. 5), das ein Mittelstück 24, ein mit diesem verbundenes Führungsteil 25, ein Eingreifteil 26 zum Fixieren an den Armen 17 des Befestigungsteils 15 und einen Sicherungsteil 27 sowie einen Abstandhalter 28 und ein erstes Halteelement 29 aufweist, das von zwei Hakenteilen gebildet ist.

Abstandhalter 28 und Halteelement 29 sind an Seitenteilen 30, 31 angeordnet, die sich im wesentlichen parallel zu dem Mittelstück 24 erstrecken und Führungsteile 32, 33 aufweisen, mit deren Hilfe der Halteteil 16 auf die Arme 17 des Befestigungsteils 15 aufsteckbar ist. Die Seitenteile 30 und 31 weisen ferner ebenfalls je eine als Eingreifteil 26 an den Armen 17 dienende Verzahnung auf, so daß der Halteteil 16 in seiner zur Befestigung dienenden Position sicher und unverrückbar am Befestigungsteil 15 fixierbar ist.

Das Mittelstück 24 des Halteteils 16 ist mit einem sich quer erstreckenden Filmscharnier 34 versehen und weist an seinem den Führungsteilen 32, 33 abgewandten Ende ein Federelement 35 auf, das als Träger für das Führungsteil 25 und die Sicherungsteile 27 dient.

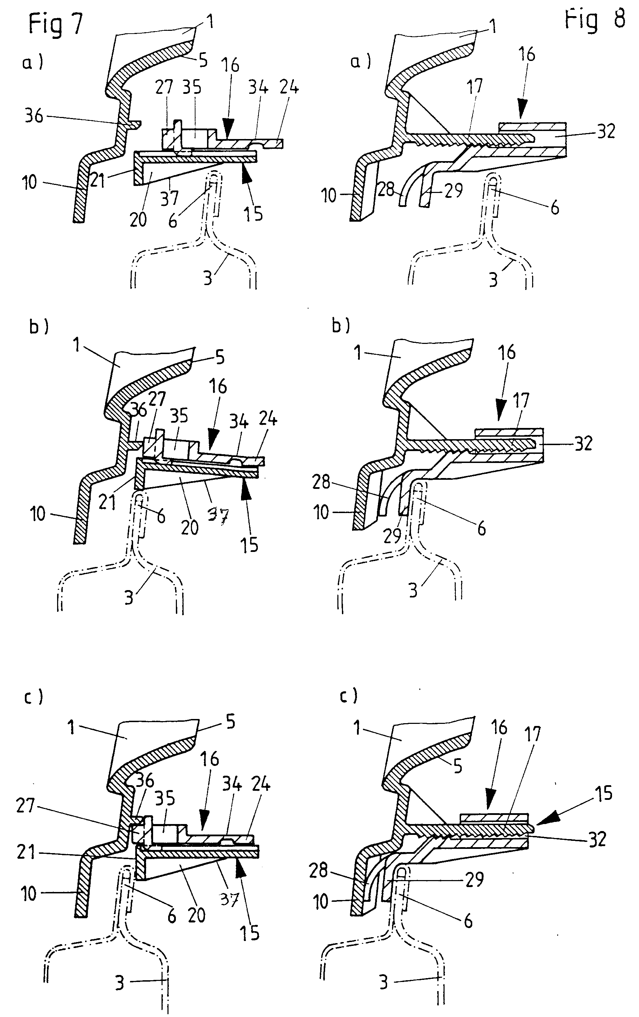

Beim Zusammenbau wird der Halteteil 16 zunächst mit Hilfe des Führungsteils 25 im Führungsteil 18 des Befestigungsteils 15 angeordnet bzw. fixiert und sodann mit seinen Führungsteilen 32, 33 auf die Arme 17 des Befestigungsteils 15 so weit aufgeschoben, bis die als zusammenwirkende Verzahnungen ausgebildeten Eingreifteile 19 an der Unterseite der Arme 17 und die als entsprechende Verzahnung ausgebildeten Eingreifteile 26 auf der Oberseite der Seitenteile 30, 31 des Halteteils 16 eine ausreichend sichere Verbindung und Befestigung aneinander gewährleisten. Diese Situation ist in den Figuren 7a und 8a dargestellt. Der Halteteil 16 ist gemäß diesen Figuren zwar auf den Armen 17 angeordnet, doch befindet er sich dort noch nicht in seiner endgültigen, zur Befestigung des Einbauteils 1 dienenden Position gemäß Fig. 7c bzw. Fig. 8c.

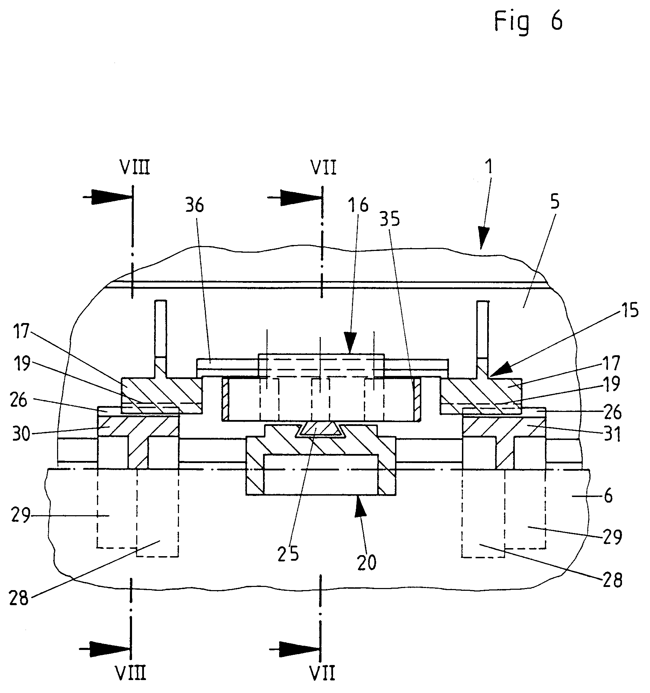

Den Sicherungsteilen 27 und dem Federelement 35 des Halteteils 16 ist mindestens ein Haltevorsprung 36 an der Rückseite 5 des zu befestigenden Einbauteils 1 zugeordnet, wie die Fig. 2, 4 und 6 und auch 7 und 8 zeigen. Dieser Haltevorsprung 36 ist zweckmäßigerweise einstückig an der Rückseite 5 des Einbauteils 1 ausgebildet.

Die Funktion und Wirkungsweise der Befestigungsvorrichtung 4 ist wie folgt.

Zunächst wird das zu befestigende Einbauteil 1 mit seinen oberen Randteilen 9 in den dort befindlichen Steckelementen 7 über den oberen Rand 8 bzw. Montageflansch 8 der Montageöffnung 2 geschoben, wie dies bereits in Fig. 2 dargestellt ist. Dabei befinden sich die unteren Randteile 10 des Einbauteils 1 noch in gewissem Abstand vor der Montageöffnung 2. Dies geht aus den Darstellungen in den Figuren 7a und 8a hervor. Wird jetzt das Einbauteil 1 1 mit seinen unteren Randteilen 10 auf den unteren Öffnungsrand 6 der Montageöffnung 2 gedrückt, so trifft zunächst die dem freien Rand 6 zugewandte Schräge 37 an der Unterseite des zweiten Halteelementes 20 des Befestigungsteils 15 auf diesen freien Rand 6 und bewirkt, daß das zweite Halteelement 20 um den Steg 22 (Fig. 4)nach oben verschwenkt wird, wobei von dem Halteteil 16 zugleich auch diejenigen Teile nach oben verschwenkt werden, die sich von dem Filmscharnier 34 aus gesehen zur Rückseite 5 des Einbauteils 1 hin erstrecken. Dazu gehören das Federelement 35 und der bzw. die dort angeordneten Haltevorsprünge 36.

Wenn bei dem gemäß Fig. 7 b nach oben erfolgenden Verschwenken des zweiten Halteelements 20 die höchste Lage erreicht ist, stehen die Sicherungsteile 27 unmittelbar in gleicher Höhe wie der Haltevorsprung 36 an der Rückseite 5 des Einbauteils 1. Gleichzeitig legen sich die ersten Halteelemente 29 am Halteteil 16 gemäß Fig. 8b aussen an den Rand 6 der Montageöffnung 2.

Wird jetzt das zu befestigende Einbauteil 1 mit seinem unteren Rand noch weiter in Richtung auf den Rand 6 der Montageöffnung 2 bewegt, so gleitet das Halteelement 20 mit seiner Haltefläche 21 hinter den Rand 6 der Montageöffnung 2 und gleichzeitig ziehen die Halteelemente 29 den Halteteil 16 noch weiter auf die Arme 17 des Befestigungsteils 15. Die Arme 17 dringen hierbei noch tiefer in die Führungsteile 32, 33 hinein, so daß schließlich auch die Abstandhalter 28 (Fig. 8c) zur Anlage auf der Rückseite 5 des zu befestigenden Einbauteils 1 gelangen.

Das zu befestigende Einbauteil 1 ist gemäß der Darstellung in den Figuren 2 sowie 7c und 8c im Bereich der unteren Randteile 10 auf der Rückseite 5 bzw. auf der Innenseite der Montageöffnung 2 mit Hilfe der Haltefläche 21 am Halteelement 20 des Befestigungsteils 15 gehalten und mit Hilfe der Halteelement 29 am Halteteil 16 fixiert. Ferner dienen die federelastischen Abstandhalter 28 als zusätzliche Rüttelsicherung gegen Klappern, wenn Erschütterungen auftreten sollten.

Schließlich stützen in der in den Fig. 2 und 7c sowie 8c dargestellten Befestigungslage auch die Sicherungsteile 27 das Einbauteil 1 durch Anlage an dem Haltevorsprung 36, der an der Rückseite 1 des Einbauteils 1 angeordnet ist. Die Teile 15 und 16 sind somit sowohl in entgegengesetzten Richtungen als auch in senkrecht zueinander stehenden Richtungen wirksam und garantieren daher eine klapperfreie Befestigung auch bei Erschütterungen.

## Patentansprüche

1. Befestigungsvorrichtung (4) zum Befestigen eines Einbauteils (1) in einer Montageöffnung (2) eines Grundteils (3), insbesondere zum Einbauen eines Kraftfahrzeugteils wie ein Kühlergitter in die Karosseriewand oder Motorhaube eines Kraftfahrzeugs, mit einem mit dem Einbauteil (1) verbundenen Befestigungsteil (15) und einem separaten Halteteil (16), das ein erstes Halteelement (29) zur Anlage am Öffnungsrand (6) des Grundteils (3) aufweist, wobei am Befestigungsteil (15) und am Halteteil (16) zusammenwirkende Führungsteile (18 bzw. 25; 17 bzw. 32, 33) zur längsverschiebbaren Lagerung des Halteteils (16) am Befestigungsteil (15) sowie zusammenwirkende Eingreifteile (19 bzw. 26), von denen eines (26) federnd auslenkbar ist, zur Fixierung der gegenseitigen Lage zwischen dem Befestigungsteil (15) und dem Halteteil (16) in der Einbaustellung vorgesehen sind, ein zweites Halteelement (20) mit einer Haltefläche (21) vorgesehen ist, die in der Einbaustellung an der dem ersten Halteelement (29) abgewandten Seite des Öffnungsrandes (6) anliegt, und von den beiden in der Einbaustellung gegensinnig am Öffnungsrand (6) anliegenden Halteelementen (20, 29) eines (20) beim einbaugemäßen Passieren der Öffnungsrandkante durch diese federnd auslenkbar ist, **dadurch gekennzeichnet**, daß das zweite Halteelement (20) am Befestigungsteil (15) angeordnet ist, so daß der Abstand zwischen den beiden Halteelementen (20, 29) durch eine Relativbewegung zwischen dem Befestigungsteil (15) und dem Halteteil (16) veränderbar ist.

2. Befestigungsvorrichtung nach Anspruch 1, **dadurch gekennzeichnet**, daß das am Befestigungsteil (15) angeordnete zweite Halteelement (20) federnd auslenkbar und zum innenseitigen Hintergreifen des Öffnungsrandes (6) vorgesehen ist.

3. Befestigungsvorrichtung nach Anspruch 1 oder 2, **dadurch gekennzeichnet**, daß das am Halteteil (16) angeordnete Eingreifteil (26) federnd auslenkbar ist.

4. Befestigungsvorrichtung nach einem der Ansprüche 1 bis 3, **dadurch gekennzeichnet**, daß das Befestigungsteil (15) einstückig an der Rückseite (5) des Einbauteils (1) angeformt ist.

5. Befestigungsvorrichtung nach einem der Ansprüche 1 bis 4, **dadurch gekennzeichnet**, daß das zweite Halteelement (20) im Querschnitt keilförmig ist, eine Schräge (37) zum Zusammenwirken mit einer Öffnungsrandkante aufweist und mit einer Führung (18) für das Halteteil (16) versehen ist.

6. Befestigungsvorrichtung nach einem der Ansprüche 1 bis 5, **dadurch gekennzeichnet**, daß das Befestigungsteil (15) zwei Arme (17) aufweist, die über einen Steg (22) miteinander verbunden sind.

7. Befestigungsvorrichtung nach einem der Ansprüche 1 bis 6, **dadurch gekennzeichnet**, daß wenigstens ein Eingreifteil (19 bzw. 26) eine Verzahnung aufweist, mit der das andere Eingreifteil (26 bzw. 19) in wenigstens zwei unterschiedlichen Relativstellungen von Befestigungsteil (15) und Rastteil (16) zusammenwirkt.

8. Befestigungsvorrichtung nach den beiden Ansprüchen 6 und 7, **dadurch gekennzeichnet**, daß beide Arme (17) des Befestigungsteils (15) auf ihrer Unterseite eine Verzahnung (19) zum Eingriff mit je einer Verzahnung am Rastteil (16) aufweisen.

9. Befestigungsvorrichtung nach einem der Ansprüche 6 bis 8, **dadurch gekennzeichnet**, daß das zweite Halteelement (20) relativ zu den beiden Armen (17) des Befestigungsteils (15) verschwenkbar ist.

10. Befestigungsvorrichtung nach Anspruch 9, **dadurch gekennzeichnet**, daß das Halteelement (20) ein freies Ende (23) mit der Haltefläche (21) aufweist und um den die beiden Arme (17) verbindenden Steg (22) als Achse verschwenkbar ist.

11. Befestigungsvorrichtung nach einem der Ansprüche 1 bis 10, **dadurch gekennzeichnet**, daß ein im Querschnitt keilförmiges zweites Halteelement (20) vorgesehen ist.

12. Befestigungsvorrichtung nach einem der Ansprüche 1 bis 11, **dadurch gekennzeichnet**, daß das am Halteteil (16) vorgesehene erste Halteelement (29) in der Einbaustellung den Öffnungsrand (6) hakenförmig übergreift und daß am Halteteil (16) wenigstens ein Abstandhalter (28) zur Anlage am Einbauteil (1) in der Einbaustellung vorgesehen ist.

13. Befestigungsvorrichtung nach einem der Ansprüche 1 bis 12, **dadurch gekennzeichnet**, daß am Halteteil (16) wenigstens ein Sicherungsteil (27) zum Verrasten mit der dem Öffnungsrand (6) zugewandten Fläche eines am Einbauteil (1) vorgesehenen Haltevorsprungs (36) vorgesehen ist.

14. Befestigungsvorrichtung nach einem der Ansprüche 1 bis 13, **dadurch gekennzeichnet**, daß das Halteteil (16) ein Mittelstück (24) und an diesem jeweils außen seitlich angeordnete Führungselemente (32, 33) zum Führen des Befestigungsteils (15) umfaßt.

15. Befestigungsvorrichtung nach Anspruch 14, **dadurch gekennzeichnet**, daß das Mittelstück (24) des Halteteils (16) ein schwenkbares Federelement (35) mit einem Führungselement (25) aufweist, das mit einer Führung (18) am Halteelement (29) des Befestigungsteils (15) zusammenwirkt.

16. Befestigungsvorrichtung nach den beiden Ansprüchen 13 und 15, **dadurch gekennzeichnet**, daß das Federelement (35) des Halteteils (16) zugleich den Sicherungsteil (27) trägt, der mit dem Haltevorsprung (36) an der Rückseite (5) des Einbauteils (1) verrastet.

## Claims

1. A fixing device (4) for fixing an installation component (1) in a fitting opening (2) in a main part (3), in particular for installing a motor vehicle component such as a radiator grill into the bodywork panel or engine bonnet of a motor vehicle, comprising a fixing member (15) connected to the installation component (1) and a separate holding member (16) which has a first holding element (29) for bearing against the edge (6) of the opening in the main part (3), wherein provided on the fixing member (15) and on the holding member (16) are co-operating guide portions (18 and 25 respectively; 17 and 32, 33 respectively) for longitudinally displaceably mounting the holding member (16) to the fixing member (15) and co-operating engagement portions (19 and 26 respectively) of which one (26) is resiliently deflectable, for fixing of the mutual position as between the fixing member (15) and the holding member (16) in the installation position, there is provided a second holding element (20) having a holding surface (21) which in the installation position bears against the side of the edge (6) of the opening, which is remote from the first holding element (29), and of the two holding elements (20, 29) which in the installation position bear in opposite directions against the edge (6) of the opening, one (20) is resiliently deflectable by the edge of the opening when passing said edge of the opening in the course of installation, characterised in that the second holding element (20) is arranged on the fixing member (15) so that the distance between the two holding elements (20, 29) is variable by a relative movement as between the fixing member (15) and the holding member (16).

2. A fixing device according to claim 1 characterised in that the second holding element (20) arranged on the fixing member (15) is resiliently deflectable and is provided for engaging at the inside behind the edge (6) of the opening.

3. A fixing device according to claim 1 or claim 2 characterised in that the engagement portion (26) which is arranged on the holding member (16) is resiliently deflectable.

4. A fixing device according to one of claims 1 to 3 characterized in that the fixing member (15) is formed integrally on the rear side of the installation component (1).

5. A fixing device according to one of claims 1 to 4 characterised in that the second holding element (20) is wedge-shaped in cross-section, has an inclined surface (37) for co-operating with an edge of the opening and is provided with a guide (18) for the holding member (16).

6. A fixing device according to one of claims 1 to 5 characterised in that the fixing member (15) has two arms (17) which are connected together by way of a limb (22).

7. A fixing device according to one of claims 1 to 6 characterised in that at least one engagement portion (19 or 26 respectively) has a tooth configuration with which the other engagement portion (26 or 19 respectively) co-operates in at least two different relative positions of the fixing member (15) and the retaining member (16).

8. A fixing device according to claims 6 and 7 characterized in that both arms of the fixing member (15) have on their underside a tooth configuration (19) for engagement with a respective tooth configuration on the retaining member (16).

9. A fixing device according to one of claims 6 to 8 characterized in that the second holding element (20) is pivotable relative to the two arms (17) of the fixing member (15).

10. A fixing device according to claim 9 characterised in that the holding element (20) has a free end (23) with the holding surface (21) and is pivotable about the limb (22) connecting the two arms (17) as an axis.

11. A fixing device according to one of claims 1 to 10 characterised in that there is provided a second holding element (20) which is wedge-shaped in cross-section.

12. A fixing device according to one of claims 1 to 11 characterised in that the first holding element (29) which is provided on the holding member (16) engages in a hook-like configuration over the edge (6) of the opening in the installation position and that provided on the holding member (16) is at least one spacer (28) for bearing against the installation component (1) in the installation position.

13. A fixing device according to one of claims 1 to 12 characterised in that provided on the holding member (16) is at least one securing portion (27) for locating engagement with the surface, that is towards the edge (6) of the opening, of a holding projection (36) on the installation component (1).

14. A fixing device according to one of claims 1 to 13 characterised in that the holding member (16) includes a central portion (24) and guide elements (32, 33) arranged thereon at each outward side, for guiding the fixing member (15).

15. A fixing device according to claim 14 characterised in that the central portion (24) of the holding member (16) has a pivotable spring element (35) with a guide element (25) which co-operates with a guide (18) on the holding element (29) of the fixing member (15).

16. A fixing device according to claims 13 and 15 characterised in that the spring element (35) of the holding member (16) at the same time carries the securing portion (27) which locatingly engages with the holding projection (36) at the rear side (5) of the installation component (1).

## Revendications

1. Dispositif de fixation (4) pour la fixation d'une pièce d'encastrement (1) dans une ouverture de montage (2) d'une pièce de base (3), en particulier pour la mise en place d'une pièce de véhicule automobile, telle qu'une grille de radiateur, dans la paroi de carrosserie ou du capot de moteur, ce dispositif comprenant une pièce de fixation (15) reliée à la pièce d'encastrement (1) et une pièce de retenue séparée (16) qui présente un premier élément de retenue (29) venant s'appliquer contre le bord d'ouverture (6) de la pièce de base (3), des pièces de guidage (18 respectivement 25 ; 17 respectivement 32, 33), qui agissent en commun sur la pièce de fixation (15) et sur la pièce de retenue (16), étant prévues pour le positionnement coulissant dans le sens de la longueur de la pièce de retenue (16) sur la pièce de fixation (15) de même que des pièces d'encliquetage associées (19 respectivement 26), dont l'une (26) est orientable à la manière d'un ressort, pour la fixation de la position opposée entre la pièce de fixation (15) et la pièce de retenue (16) en position d'encastrement, la pièce de retenue séparée présentant également un second élément de retenue (20) avec une surface de retenue (21), surface qui est appliquée, en position encastrée, contre la face du bord (6) de l'ouverture, détournée du premier élément de retenue (29) et, des deux éléments de retenue (20, 29) appliqués, en position encastrée, contre la face du bord (6) de l'ouverture, détournée du premier élément de retenue (29), un élément (20) étant orientable à la manière d'un ressort lors du passage, conforme au montage, du rebord d'ouverture, caractérisé en ce que le second élément de retenue (20) est disposé sur la pièce de fixation (15) si bien que la distance entre les deux éléments de retenue (20, 29) est variable par un mouvement relatif entre la pièce de fixation (15) et la pièce de retenue (16).

2. Dispositif de fixation selon la revendication 1, caractérisé en ce que le second élément de retenue (20), disposé sur la pièce de fixation (15), est orientable à la manière d'un ressort et la face interne du bord d'ouverture (6) est prévue pour y être appliquée par l'arrière.

3. Dispositif de fixation selon la revendication 1 ou 2, caractérisé en ce que la pièce d'encliquetage (26), disposée sur la pièce de retenue (16), est orientable à la manière d'un ressort.

4. Dispositif de fixation selon l'une des revendications 1 à 3, caractérisé à ce que la pièce de fixation (15) est moulée d'une seule pièce sur la face arrière (5) de la pièce d'encastrement (1).

5. Dispositif de fixation selon l'une des revendications 1 à 4, caractérisé en ce que le second élément de retenue (20) a une section transversale cunéiforme, présente une inclinaison (37) pour la coopération avec un rebord d'ouverture et est muni d'un guide (18) pour la pièce de retenue (16).

6. Dispositif de fixation selon l'une des revendications 1 à 5, caractérisé en ce que la pièce de fixation (15) présente deux bras (17) qui sont reliés entre eux par une paroi (22).

7. Dispositif de fixation selon l'une des revendications 1 à 6, caractérisé en ce qu'au moins une pièce d'encliquetage (19 respectivement 26) présente une denture avec laquelle coopère l'autre pièce d'encliquetage (26 respectivement 19) dans au moins deux positions relatives différentes de la position de fixation (15) et de la pièce d'arrêt (16).

8. Dispositif de fixation selon les deux revendications 6 et 7, caractérisé en ce que les deux bras (17) de la pièce de fixation (15) présentent, sur leurs faces inférieures, une denture (19) pour venir en prise avec une denture se trouvant sur la pièce d'arrêt (16).

9. Dispositif de fixation selon l'une des revendications 6 à 8, caractérisé en ce que le second élément de retenue (20) est pivotant par rapport aux deux bras (17) de la pièce de fixation (15).

10. Dispositif de fixation selon la revendication 9, caractérisé en ce que l'élément de retenue (20) présente une extrémité libre (23) avec une surface de retenue (21) et est pivotant autour de la paroi (22), reliant les deux bras (17), qui fait office de pivot.

11. Dispositif de fixation selon l'une des revendications 1 à 10, caractérisé en ce qu'il est prévu un second élément de retenue (20) dont la section transversale est cunéiforme.

12. Dispositif de fixation selon l'une des revendications 1 à 11, caractérisé en ce que le premier élément de retenue (29), prévu sur la pièce de retenue (16), chevauche, en position d'encastrement, le bord (6) de l'ouverture, à la manière d'un crochet et en ce qu'il est prévu, sur la pièce de retenue (16), au moins une pièce d'écartement (28) pour l'application de la pièce d'encastrement (1) en position d'encastrement.

13. Dispositif de fixation selon l'une des revendications 1 à 12, caractérisé en ce qu'il est prévu, sur la pièce de retenue (16), au moins une pièce de serrage (27) pour l'encliquetage avec la surface d'une saillie de retenue (36) prévue sur la pièce d'encastrement (1), la surface étant tournée vers le bord (6) de l'ouverture.

14. Dispositif de fixation selon l'une des revendications 1 à 13, caractérisé en ce que la pièce de retenue (16) comprend une pièce médiane (24) sur la face externe de laquelle sont disposés des éléments de guidage (32, 33) pour le guidage de la pièce de fixation (15).

15. Dispositif de fixation selon la revendication 14, caractérisé en ce que la pièce médiane (24) de la pièce de retenue (16) présente un élément de ressort pivotant (35) présentant un élément de guidage (25) qui coopère avec un guide (18) sur l'élément de retenue (29) de la pièce de fixation (15).

16. Dispositif de fixation selon les deux revendications 13 et 15, caractérisé en ce que l'élément de ressort (35) de la pièce de retenue (16) porte en même temps la pièce de serrage (27) qui s'encliquète avec la saillie de retenue (36) sur la face arrière (5) de la pièce d'encastrement (1).
